# EUROPEAN PATENT SPECIFICATION

(11) **EP 2 385 088 B1**
(45) Date of publication and mention of the grant of the patent: **14.11.2012**
(21) Application number: 11157683.1
(22) Date of filing: 10.03.2011
(51) Int. Cl.: C09J 7/02, C09J 11/04

(54) **Pressure-sensitive adhesive tape**
Druckempfindliches Klebeband
Bande adhésive sensible à la pression

(30) Priority: 11.03.2010 JP 2010054859
(43) Date of publication of application: 09.11.2011
(73) Proprietor: NITTO DENKO CORPORATION, Ibaraki-shi, Osaka 567-8680 (JP)
(72) Inventor: Ogawa, Takuma, Ibaraki-shi Osaka 567-8680 (JP); Tsubaki, Hiroyuki, Ibaraki-shi Osaka 567-8680 (JP); Inokuchi, Shinji, Ibaraki-shi Osaka 567-8680 (JP); Kosaka, Tokuhisa, Ibaraki-shi Osaka 567-8680 (JP); Hirose, Tetsuya, Ibaraki-shi Osaka 567-8680 (JP)
(74) Representative: Grünecker, Kinkeldey, Stockmair & Schwanhäusser

(56) References cited:
- EP-A1- 1 964 900
- DATABASE WPI Week 200613 Thomson Scientific, London, GB; AN 2006-121321 XP000002657630, & JP 2006 022189 A (NITTO DENKO CORP) 26 January 2006 (2006-01-26)
- DATABASE WPI Week 200982 Thomson Scientific, London, GB; AN 2009-R90091 XP000002657692, & WO 2009/144889 A1 (NITTO DENKO CORP) 3 December 2009 (2009-12-03)

## Description

The present invention relates to a pressure-sensitive adhesive tape.

When adhesion is performed on a curved surface or a concave-convex surface in which cohesive strength, processability, and resistance to resilience, etc., of an adhesive are needed, a pressure-sensitive adhesive tape having a pressure-sensitive adhesive layer and a substrate is used in many cases.

In order to improve the initial adhesive force and the adhesiveness to a rough surface or to achieve a reduction in cost by reducing a use amount of an adhesive, fine bubbles are sometimes contained in the pressure-sensitive adhesive layer of a pressure-sensitive adhesive tape having the pressure-sensitive adhesive layer and a substrate. For example, a technique in which bubbles are scattered in an adhesive layer is known (Japanese Patent Application Publication No. Hei6-234961).

Also, in order to achieve a reduction in weight and improvement of whiteness, dimensional stability, and warp, etc., of a pressure-sensitive adhesive tape having a pressure-sensitive adhesive layer and a substrate, hollow inorganic fine particles are sometimes contained in the pressure-sensitive adhesive layer of the pressure-sensitive adhesive tape. For example, a pressure-sensitive adhesive tape in which glass micro-bubbles are scattered in the pressure-sensitive adhesive layer thereof is known (Japanese Patent No. S57-17030).

However, in a conventional pressure-sensitive adhesive tape containing fine bubbles and hollow inorganic fine particles in the pressure-sensitive adhesive layer thereof, the fine bubbles that have been intended to be independently present in the pressure-sensitive adhesive layer are aggregated (integrated) together; consequently, there are sometimes the case where large bubbles are formed. When the bubble produced in the pressure-sensitive adhesive layer due to the aggregation of fine bubbles is a large bubble having a diameter of, for example, several hundred µm or more, there is the problem that pinholes are generated in the pressure-sensitive adhesive layer in a formed pressure-sensitive adhesive tape, and thereby qualities of the pressure-sensitive adhesive tape, such as adhesiveness and light blocking effect, etc. , become poor and the appearance thereof also becomes poor. Herein, the pinhole means a structure in which, when light is radiated onto one surface of a pressure-sensitive adhesive layer that is in the state of not being laminated on a substrate, the transmission amount of the light on the other surface thereof exceeds a predetermined threshold value due to the presence of bubbles each having a predetermined size or more in the pressure-sensitive adhesive layer. The threshold value of the size of a pinhole will be described later. A structure in which a bubble forms a through-hole in the pressure-sensitive adhesive layer in a pressure-sensitive adhesive tape is also included in the above pinhole.

JP-A-2006-022189 discloses a pressure-sensitive adhesive tape comprising a pressure-sensitive adhesive layer containing a pressure-sensitive adhesive composition, a gas bubble, a hollow microsphere-like component, and a fluorosurfactant.

WO-A-2009/144889 discloses a pressure-sensitive adhesive tape comprising a pressure-sensitive adhesive layer containing a pressure-sensitive adhesive composition, a bubble, and an inorganic filler.

EP-A-1964900 discloses a pressure-sensitive adhesive tape comprising a pressure-sensitive adhesive layer containing a pressure-sensitive adhesive composition, and a bubble.

The object of the invention is to provide a technique in which the size of the pinhole and the number of the pinholes in a pressure-sensitive adhesive tape can be suppressed.

The present invention provides a pressure-sensitive adhesive tape comprising a pressure-sensitive layer containing a pressure-sensitive composition, a bubble, and a hollow inorganic fine particle. The hollow inorganic fine particle contains at least sodium and silicon, and the mass ratio of the sodium and silicon contained in the hollow inorganic fine particle (Na/Si) is 0.5 or less. Thereby, the size of the pinhole and the number of the pinholes can be effectively suppressed.

The hollow inorganic fine particle may contain borosilicate glass. Thereby, the size of the pinhole and the number of the pinholes can be further suppressed effectively.

Also, the pressure-sensitive adhesive composition may contain an acrylic polymer. Thereby, a pressure-sensitive adhesive tape excellent in the initial adhesiveness at low temperature can be made.

A preferred embodiment of the invention is a pressure-sensitive adhesive tape as described above, wherein, when a pinhole region is present in the pressure-sensitive adhesive layer where the light that has been radiated onto one surface of the pressure-sensitive adhesive layer is transmitted through the pressure-sensitive adhesive layer up to the other surface thereof, the number of the pinhole regions each having a diameter of 1.5 mm or more is 0.004 or less per a region of 100 cm x 1 cm whose long side is oriented along the longitudinal direction of the tape. Thereby, a pressure-sensitive adhesive tape excellent in appearance property can be made.

Alternatively, the number of the pinhole regions each having a diameter within a range of 0.8 mm or more to less than 1.5 mm may be 0.1 or less per the aforementioned region. Thereby, a pressure-sensitive adhesive tape further excellent in appearance property can be made.

Alternatively, the number of the pinhole regions each having a diameter of 1.5 mm or more may be 0.001 or less per the aforementioned region. Thereby, a pressure-sensitive adhesive tape further excellent in appearance property can be made.

Embodiments will now be described, by way of example only, with reference to the accompanying drawing, which is meant to be exemplary, not limiting, in which:

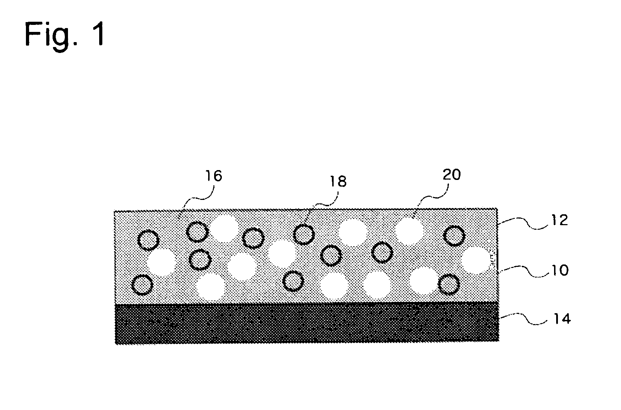

Fig. 1 is a partial sectional view of a pressure-sensitive adhesive tape according to the present embodiment.

The invention will now be described by reference to the preferred embodiments. This does not intend to limit the scope of the present invention, but to exemplify the invention.

Hereinafter, embodiments of the present invention will be described in detail with reference to the accompanying drawing and tables.

### [Pressure-Sensitive Adhesive Tape]

A pressure-sensitive adhesive tape (pressure-sensitive adhesive member) according to the present embodiment can follow the distortion and deformation of an adherend, occurring due to a change in temperature, and accordingly can exhibit strong adhesive force, high durability, and high heat resistance, by using materials that are flexible and excellent in durability for the adhesive and main compositions of the substrate. The pressure-sensitive adhesive tape according to the embodiment should not be particularly limited in shape, and may have a sheet shape besides a long shape such as tape. Hereinafter, a tape-shaped pressure-sensitive adhesive tape whose one surface is only a pressure-sensitive adhesive surface will be described.

Fig. 1 is a partial sectional view of a pressure-sensitive adhesive tape 10 according to the present embodiment. As illustrated in Fig. 1, the pressure-sensitive adhesive tape 10 comprises a pressure-sensitive adhesive layer 12 as an adhesive, and a substrate 14 as a support layer for supporting the pressure-sensitive adhesive layer 12. The pressure-sensitive adhesive layer 12 has a pressure-sensitive adhesive composition 16, a hollow inorganic fine particle 18 contained in the pressure-sensitive adhesive composition 16, and a bubble 20 formed in the pressure-sensitive adhesive composition 16. The pressure-sensitive adhesive composition 16 contains a base polymer and other additives, such as pigment, surfactant, polymerization initiator, and cross-linking agent, etc.

The pressure-sensitive adhesive tape 10 according to the present embodiment may have a form in which pressure-sensitive adhesive surfaces are formed on both surfaces of the adhesive tape 10, other than the form illustrated in Fig. 1 in which a pressure-sensitive adhesive surface is formed on only one surface thereof. In the case, both of the pressure-sensitive adhesive layers each forming the pressure-sensitive adhesive surface may be the same type as each other, or different from each other. Such a pressure-sensitive adhesive tape 10 may be a single separator type in which the pressure-sensitive adhesive surfaces are protected by only a separator (release liner), or a double separator type in which the pressure-sensitive adhesive surfaces on both surfaces are protected by two separators.

Alternatively, the pressure-sensitive adhesive tape 10 may have a structure composed of only the pressure-sensitive adhesive layer 12 without the substrate 14. In this case, it is preferable to protect the pressure-sensitive adhesive surfaces with two separators on both sides.

Also, the substrate 14 may be composed of a similar composition as the pressure-sensitive adhesive composition 16 contained in the pressure-sensitive adhesive layer 12, and the hollow inorganic fine particles 18 and the bubbles 20 may be appropriately contained therein. Also, the pressure-sensitive adhesive tape 10 may be formed into a form of being wound in a roll shape. When the pressure-sensitive adhesive tape 10 is formed into a form of being wound in a roll shape, the above formation can be made by, for example, winding the pressure-sensitive adhesive layer 12 into a roll shape in the state where the pressure-sensitive adhesive layer 12 is protected by a separator or a release treatment layer formed on the back

The pressure-sensitive adhesive tape 10 may have another layer (for example, an intermediate layer, and a subbing layer, etc.) as far as the effects of the present invention are not impaired.

### [Pressure-Sensitive Adhesive Layer]

### (Base Polymer)

The pressure-sensitive adhesive composition 16 contained in the pressure-sensitive adhesive layer 12 includes a base polymer. The base polymer can be used alone or in combination of two or more thereof. As the base polymer, those used in publicly-known acrylic pressure-sensitive adhesives can be preferably used because they are excellent in the initial adhesiveness at low temperature. An acrylic pressure-sensitive adhesive usually contains, as the base polymer, an acrylic polymer [in particular, an acrylic polymer whose monomer main component is (meth)acrylic acid ester]. In the acrylic polymer, (meth) acrylic acid esters may be used alone or in combination of two or more thereof. As such a (meth)acrylic acid ester, a (meth) acrylic acid alkyl ester can be used preferably. Examples of the (meth)acrylic acid alkyl ester in the acrylic polymer include, for example: (meth)acrylic acid C₁₋₂₀ alkyl esters [preferably (meth) acrylic acid C₂₋₁₄ alkyl esters, more preferably (meth) acrylic acid C₂₋₁₀ alkyl esters], such as (meth) acrylic acid methyl, (meth)acrylic acid ethyl, (meth)acrylic acid propyl, (meth)acrylic acid isopropyl, (meth)acrylic acid butyl, (meth)acrylic acid isobutyl, (meth)acrylic acid s-butyl, (meth)acrylic acid t-butyl, (meth)acrylic acid pentyl, (meth)acrylic acid isopentyl, (meth)acrylic acid hexyl, (meth)acrylic acid heptyl, (meth)acrylic acid octyl, (meth)acrylic acid 2-ethylhexyl, (meth)acrylic acid isooctyl, (meth)acrylic acid nonyl, (meth)acrylic acid isononyl, (meth)acrylic acid decyl, (meth)acrylic acid isodecyl, (meth)acrylic acid undecyl, (meth)acrylic acid dodecyl, (meth)acrylic acid tridecyl, (meth)acrylic acid tetradecyl, (meth)acrylic acid pentadecyl, (meth)acrylic acid hexadecyl, (meth)acrylic acid heptadecyl, (meth)acrylic acid octadecyl, (meth)acrylic acid nonadecyl, and (meth)acrylic acid eicosyl, etc.

Examples of (meth)acrylic acid esters other than (meth)acrylic acid alkyl esters include, for example:
(meth) acrylic acid esters having an alicyclic hydrocarbon group, such as cyclopentyl (meth) acrylate, cyclohexyl (meth) acrylate, and isobornyl (meth) acrylate, etc. ; and (meth) acrylic acid esters having an aromatic hydrocarbon group, such as phenyl (meth)acrylate, etc.

Because a (meth) acrylic acid ester is used as a monomer main component of the acrylic polymer, it is preferable that the ratio of the (meth)acrylic acid ester [in particular, (meth)acrylic acid alkyl ester] to the total mass of the monomer components for preparing the acrylic polymer is, for example, 60 mass% or more (preferably 80 mass% or more). Thereby, it is unnecessary to separately perform an adhesion treatment to use as an adhesive, and hence an adhesive can be produced in a relatively simple and easy way, allowing the production efficiency to be improved.

In the aforementioned acrylic polymer, various copolymeric monomers, such as polar group-containing monomer and polyfunctional monomer, may be used as monomer components. By using a copolymeric monomer as a monomer component, for example, the adhesive force to an adherend can be improved or the cohesive force of an adhesive (pressure-sensitive adhesive) can be enhanced. Copolymeric monomers can be used alone or in combination of two or more thereof.

Examples of the aforementioned polar group-containing monomers include, for example: carboxyl group-containing monomers, such as (meth) acrylic acid, itaconic acid, maleic acid, fumaric acid, crotonic acid, and isocrotonic acid, or anhydrides thereof (maleic anhydride, etc.); hydroxyl group-containing monomers, such as (meth)acrylic acid hydroxyalkyls including (meth)acrylic acid hydroxyethyl, (meth)acrylic acid hydroxypropyl, and (meth)acrylic acid hydroxybutyl, etc.; amide group-containing monomers, such as acrylamide, methacrylamide, N,N-dimethyl(meth)acrylamide, N-methylol(meth)acrylamide, N-methoxymethyl(meth)acrylamide, and N-butoxymethyl(meth)acrylamide, etc.; amino group-containing monomers, such as (meth)acrylic acid aminoethyl, (meth)acrylic acid dimethylaminoethyl, and (meth)acrylic acid t-butylaminoethyl, etc.; glycidyl group-containing monomers, such as (meth)acrylic acid glycidyl and (meth)acrylic acid methylglycidyl, etc.; cyano group-containing monomers, such as acrylonitrile and methacrylonitrile, etc.; and heterocycle-containing vinyl monomers, such as N-vinylpyridine, N-vinylpiperidone, N-vinylpyrimidine, N-vinylpiperazine, N-vinylpyrazine, N-vinylpyrrole, N-vinylimidazole, and N-vinyloxazole, etc., as well as N-vinyl-2-pyrrolidone and (meth)acryloyl morpholine. As the polar group-containing monomer, carboxyl group-containing monomers, such as acrylic acid, etc., or anhydrides thereof are preferred.

The use amount of the polar group-containing monomer is 30 mass% or less (for example, 1 to 30 mass%) based on the total mass of the monomer components for preparing the acrylic polymer, and is preferably 3 to 20 mass%. If the use amount of the polar group-containing monomer exceeds 30 mass% based on the total mass of the monomer components for preparing the acrylic polymer, for example, the cohesive force of the acrylic pressure-sensitive adhesive becomes too high, and accordingly there is the fear that the pressure-sensitive adhesiveness may be deteriorated. On the other hand, if the use amount thereof is too small (for example, below one mass% based on the total mass of the monomer components for preparing the acrylic monomer), for example, the cohesive force of the acrylic pressure-sensitive adhesive is decreased, and accordingly high shear force cannot be obtained. A polyfunctional monomer can also be used to adjust the cohesive

Examples of the aforementioned polyfunctional monomers include, for example: hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylol methane tri(meth)acrylate, allyl(meth)acrylate, vinyl(meth)acrylate, divinylbenzene, epoxy acrylate, polyester acrylate, urethane acrylate, butyl di(meth)acrylate, and hexyl di(meth)acrylate, etc.

The use amount of the polyfunctional monomer is two mass% or less (for example, 0.01 to 2 mass%) based on the total mass of the monomer components for preparing the acrylic polymer, and is preferably 0.02 to 1 mass%. If the use amount of the polyfunctional monomer exceeds two mass% based on the total mass of the monomer components for preparing the acrylic polymer, for example, the cohesive force of the acrylic pressure-sensitive adhesive becomes too high, and hence there is the fear that the pressure-sensitive adhesiveness may be deteriorated. On the other hand, if the use amount of the polyfunctional monomer is too small (for example, below 0.01 mass% based on the total mass of the monomer components for preparing the acrylic polymer), for example, there is the fear that the cohesive force of the acrylic pressure-sensitive adhesive may be decreased.

Examples of the copolymeric monomers other than the polar group-containing monomers or polyfunctional monomers include, for example: vinyl esters, such as vinyl acetate and vinyl propionate, etc.; aromatic vinyl compounds, such as styrene and vinyl toluene, etc.; olefins or dienes, such as ethylene, butadiene, isoprene and isobutylene, etc. ; vinyl ethers, such as vinyl alkyl ether, etc.; vinyl chloride; (meth)acrylic acid alkoxy alkyl monomers, such as (meth) acrylic acid methoxyethyl, and (meth)acrylic acid ethoxyethyl, etc.; sulfonate group-containing monomers, such as vinyl sulfonate sodium, etc.; phosphate group-containing monomers, such as 2-hydroxyethyl acryloyl phosphate, etc.; imide group-containing monomers, such as cyclohexyl maleimide and isopropyl maleimide, etc.; isocyanate group-containing monomers, such as 2-methacryloyloxyethyl isocyanate, etc.; fluorine atom-containing (meth)acrylate; and

### (Polymerization Initiator)

The aforementioned acrylic polymer can be prepared by a publicly-known or commonly-used polymerization method. Examples of the polymerization method include, for example, a solution polymerization method, emulsion polymerization method, bulk polymerization method, and photopolymerization method, etc. In producing the pressure-sensitive adhesive layer 12 according to the present embodiment, when the acrylic polymer is to be prepared as a base polymer, it is preferable to utilize a curing reaction by heat or an activated energy ray, in which a polymerization initiator, such as a thermal polymerization initiator or photopolymerization initiator (photoinitiator), is used, in terms of workability and obtaining a stable bubble structure. That is, the pressure-sensitive adhesive composition 16 according to the embodiment contains a polymerization initiator, such as a thermal polymerization initiator or photopolymerization initiator, etc.

When containing a polymerization initiator (thermal polymerization initiator or photopolymerization initiator, etc.), as stated above, the pressure-sensitive adhesive composition 16 can be cured by heat or an activated energy ray. Accordingly, because the pressure-sensitive adhesive component 16 is cured in the state where the hollow inorganic fine particles 18 are mixed, the pressure-sensitive adhesive layer 12 can be easily formed in which the hollow inorganic fine particles 18 are stably contained.

As such a polymerization initiator, a photopolymerization initiator can be preferably used in terms of the advantage that a polymerization period can be shortened, etc. That is, it is preferable that the pressure-sensitive adhesive layer 12 is formed so as to stably contain the hollow inorganic fine particles 18 and the bubbles 20 by utilizing polymerization with the use of an activated energy ray. The polymerization initiators can be used alone or in combination of two or more thereof.

Such a photopolymerization initiator is not particularly limited, but, for example, a benzoin ether photopolymerization initiator, acetophenone photopolymerization initiator, α-ketol photopolymerization initiator, aromatic sulfonyl chloride photopolymerization initiator, photoactive oxime photopolymerization initiator, benzoin photopolymerization initiator, benzyl photopolymerization initiator, benzophenone photopolymerization initiator, ketal photopolymerization initiator, or thioxanthone photopolymerization initiator, etc., can be used.

Specific examples of the benzoin ether photopolymerization initiator include, for example: benzoin methyl ether, benzoin ethyl ether, benzoin propyl ether, benzoin isopropyl ether, benzoin isobutyl ether, 2,2-dimethoxy-1,2-diphenylethane-1-one, and anisole methyl ether, etc. Specific examples of the acetophenone photopolymerization initiator include, for example: 2,2-diethoxyacetophenone, 2,2-dimethoxy-2-phenylacetophenone, 1-hydroxycyclohexyl phenyl ketone, 4-phenoxy dichloroacetophenone, and 4-t-butyl-dichloroacetophenone, etc. Specific examples of the α-ketol photopolymerization initiator include, for example: 2-methyl-2-hydroxy propiophenone and 1-[4-(2-hydroxyethyl)-phenyl]-2-hydroxy-2-methylpropane-1-one, etc. Specific examples of the aromatic sulfonyl chloride photopolymerization initiator include, for example, 2-naphthalene sulfonyl chloride, etc. Specific examples of the photoactive oxime photopolymerization initiator include, for example, 1-phenyl-1,1-propanedione-2-(o-ethoxycarbonyl)-oxime,

Specific examples of the benzoin photopolymerization initiator include, for example, benzoin, etc. Specific examples of the benzyl photopolymerization initiator include, for example, benzyl, etc. Specific examples of the benzophenone photopolymerization initiators include, for example, benzophenone, benzoylbenzoic acid, 3,3'-dimethyl-4-methoxybenzophenone, polyvinyl benzophenone, and α-hydroxy cyclohexyl phenyl ketone, etc. Specific examples of the ketal photopolymerization initiator include, for example, benzyl dimethyl ketal, etc. Specific examples of the thioxanthone photopolymerization initiator include, for example, thioxanthone, 2-chlorothioxanthone, 2-methyl thioxanthone, 2, 4-dimethyl thioxanthone, isopropyl thioxanthone, 2, 4-dichloro thioxanthone, 2,4-diethyl thioxanthone, 2,4-diisopropyl thioxanthone, and dodecyl thioxanthone, etc.

The use amount of the photopolymerization initiator is not particularly limited as far as the acrylic polymer can be formed by photopolymerization, but can be selected from a range of, for example, 0.01 to 5 parts by mass (preferably 0.03 to 3 parts by mass) based on 100 parts by mass of the whole monomer components for forming the base polymer in the pressure-sensitive adhesive composition 16 [in particular, the whole monomer components for forming the acrylic polymer whose monomer main component is (meth)acrylic acid ester].

In activating the photopolymerization initiator, it is important to radiate an activated energy ray to the pressure-sensitive adhesive composition 16. Examples of such an activated energy ray include, for example: ionizing radiations, such as an α-ray, β-ray, γ-ray, neutron ray, and electron beam, etc. ; and an ultraviolet ray, etc., and among them, an ultraviolet ray is particularly preferred. Radiation energy of an activated energy ray and a radiation period thereof, etc., are not particularly limited, and they only have to activate the photopolymerization initiator to generate a reaction of the monomer components. As stated above, by polymerized with an action by the activated energy ray, quick and uniform polymerization can be performed, thereby allowing the production efficiency to be improved.

Examples of the thermal polymerization initiator include, for example: azo polymerization initiators [for example, 2,2'-azobisisobutyronitrile,
2,2'-azobis-2-methylbutyronitrile,
2,2'-azobis(2-methylpropionic acid)dimethyl,
4,4'-azobis-4-cyanovalerianic acid, azobis isovaleronitrile,
2,2'-azobis(2-amidinopropane)dihydrochloride,
2,2'-azobis[2-(5-methyl-2-imidazoline-2-yl) propane]dihydrochloride,
2,2'-azobis(2-methylpropionamidine)disulfate, and 2,2'-azobis (N,N'-dimethyleneisobutylamidine)dihydrochloride, etc.]; peroxide polymerization initiators (for example, dibenzoyl peroxide, and tert-butyl permaleate, etc.); and redox polymerization initiator, etc. The use amount of the thermal polymerization initiator is not particularly limited, and only has to be within a conventional range in which it can be used as a thermal polymerization initiator.

As stated above, because the pressure-sensitive adhesive layer 12 is stably cured, by using a thermal polymerization initiator, in a state where the hollow inorganic fine particles 18 are scattered by various polymerizations, thereby allowing the cohesive force and heat resistance of the pressure-sensitive adhesive layer 12 to be improved.

### (Hollow Inorganic Fine Particle)

By using the hollow inorganic fine particle 18 as a component of the pressure-sensitive adhesive composition 16, the shear adhesive force of the pressure-sensitive adhesive layer 12 can be enhanced and the processability thereof can also be improved.

A method of containing the hollow inorganic fine particles 18 into the pressure-sensitive adhesive composition 16 is not particularly limited, but a method can be cited in which, for example, after the pressure-sensitive adhesive composition 16 of which the pressure-sensitive adhesive layer 12 consist has been formed, the hollow inorganic fine particles 18 are combined and mixed into the pressure-sensitive adhesive composition 16. Alternatively, as another method, a method can be cited in which the hollow inorganic fine particles 18 are combined and mixed into a mixture of acrylic monomers of which the acrylic polymer is formed or into a partial polymer in which part of the acrylic monomers has been polymerized. Of these methods, the latter method is preferred in terms of the workability.

Examples of the hollow inorganic fine particle 18 contained in the pressure-sensitive adhesive layer 12 according to the present embodiment include, for example: carbide particles, such as silicon carbide, boron carbide, and carbon nitride, etc.; nitride particles, such as aluminum nitride, silicon nitride, and boron nitride, etc.; ceramic particles represented by oxides, such as alumina and zirconium; and inorganic fine particles, such as calcium carbide, aluminum hydroxide, glass, silica, and hydrophobic silica, etc. It is preferable that the hollow inorganic fine particle 18 to be used in the present invention is a hollow inorganic micro-sphere. Examples of the hollow inorganic micro-sphere include, for example: metal-reactive hollow balloon, such as hollow glass balloon (glass bead) and hollow aluminum balloon, etc.; and hollow balloon made of porcelain, such as hollow ceramic balloon, etc. The hollow glass balloon (glass bead) is preferred as the hollow inorganic fine particle 18.

The hollow inorganic fine particle 18 contains at least sodium and silicon. When the hollow glass balloon is used as the hollow inorganic fine particle 18, artificial glass, for example, such as borosilicate glass, borosilicic acid glass, silicic acid glass including silica balloon, or the like, can be used as a component for forming the hollow glass balloon. Shirasu balloon, which is natural silicon, can also be used as a component for forming the hollow glass balloon. Raw materials of the Shirasu balloon are volcanic ejecta, such as pumice fall made of pumice tuff-conglomerate, etc., and the composition of the Shirasu balloon usually includes compounds, such as FeO, Fe₂O₃, CaO, Na₂O and K₂O, as well as SiO₂ and Al₂O₃ (aluminum silicate). Borosilicate glass can be preferably used as a component for forming the hollow glass balloon because the aggregation of the bubbles 20 can be effectively suppressed.

The mass ratio of the sodium and the silicon that are contained in the hollow inorganic fine particle 18 (Na/Si ratio) is between 0.1 and 0.5 (inclusive), preferably between 0.1 and 0.3 (inclusive), and more preferably between 0.1 and 0.2 (inclusive). When the hollow glass balloon whose main component is borosilicate glass is used and the Na/Si ratio is made to be 0.5 or less, the formation of large pinholes (the reference by which the large pinhole is defined will be described later) is greatly suppressed in comparison with the pressure-sensitive adhesive tape in which the hollow glass balloon whose main material is sodium borosilicate glass is used as the hollow inorganic fine particle 18. Also, by making the Na/Si ratio to be 0.3 or less, the formation of large pinholes can be further greatly suppressed. Also, by making the Na/Si ratio to be 0.2 or less, the pressure-sensitive adhesive tape 10 having a very excellent appearance property can be formed, in which pinholes each having a size equal or smaller than that of small pinhole (the reference by which the small pinhole is defined will be described later) are hardly present.

As stated above, it is particularly preferable that the main material of the hollow inorganic fine particle 18 is borosilicate glass. By using borosilicate glass whose sodium atom content is low as the main material, it becomes possible to make the Na/Si ratio of the hollow inorganic fine particle 18 small, and thereby the aggregation of the bubbles 20 can be suppressed. As a result, it becomes possible to greatly reduce the total number of pinholes including pinholes each having a moderate size (middle pinhole) and pinholes each having a small size (small pinhole), and it also becomes possible to particularly suppress the formation of large pinholes and middle pinholes.

Although detailed descriptions will be described later, the large pinhole, middle pinhole, and small pinhole, respectively mean the pinhole with the largest transmission amount of light, that with the middle transmission amount thereof, and that with the smallest transmission amount thereof, when pinholes are classified into three levels based on the transmission amount of light.

The surface of the hollow inorganic fine particle 18 may be subjected to various surface treatments (for example, low surface tension treatment by a silicone compound or fluorine compound, etc.), as long as the formation of pinholes can be suppressed alike.

When the hollow glass balloon whose main material is sodium borosilicate glass is used in the pressure-sensitive adhesive layer as the hollow inorganic fine particle 18, as done before, the aggregation of the bubbles 20 cannot be suppressed, and thereby extremely many pinholes are generated. Also, in the case, many large pinholes and many middle pinholes are generated in addition to the fact that the number of generated pinholes is large. On the other hand, it becomes possible to suppress the formation of pinholes by using, in the pressure-sensitive adhesive layer 12, the hollow inorganic fine particle 18 (for example, those whose main material is borosilicate glass) having the property by which the aggregation of the bubbles 20 is suppressed. Thereby, the number of the pinholes to be generated can be greatly reduced. Further, the formation of the large and middle pinholes can be suppressed by suppressing the aggregation of the bubbles 20, and thereby the sizes of the pinholes can be made uniform. Furthermore, the distribution of pinholes can be made uniform by suppressing the formation of pinholes. Thereby, when a pressure-sensitive adhesive tape is made by cutting a sheet-shaped pressure-sensitive adhesive tape that has been produced, the pressure-sensitive adhesive tape whose every part is uniform can be made.

The average particle size (average diameter) of the hollow inorganic fine particle 18 is not particularly limited, but may be selected in accordance with a desired property required for the pressure-sensitive adhesive layer 12. For example, the average particle size of the hollow inorganic fine particle 18 may be within a range of, for example, 1 to 500 µm, preferably within a range of 5 to 200 µm, and more preferably 10 to 100 µm. Thereby, the surface area of the hollow inorganic fine particles 18 per unit mass of the pressure-sensitive adhesive layer 12 can be made large without impairing the properties of the pressure-sensitive adhesive layer 12, such as the shear strength and holding force thereof. The distribution of the size of the hollow inorganic fine particles 18 may be homogeneous or particles having various sizes may be mixed.

The specific gravity of the hollow inorganic fine particle 18 is not particularly limited, but may be selected in accordance with a desired property required for the pressure-sensitive adhesive layer 12. For example, the specific gravity thereof may be within a range of 0.1 to 0.8 g/cm³, and preferably within a range of 0.15 to 0.5 g/cm³. Thereby, the surface area of the hollow inorganic fine particles 18 per unit mass of the pressure-sensitive adhesive layer 12 can be made large without impairing the properties of the pressure-sensitive adhesive layer 12, such as the shear strength and the holding force thereof.

When the specific gravity of the hollow inorganic fine particle 18 is larger than 0.1 g/cm³, and more preferably larger than 0.15 g/cm³, floating of the hollow inorganic fine particles 18 can be reduced when the hollow inorganic fine particles 18 is combined and mixed into a mixture of the acrylic monomers or into a partial polymer in which part of the acrylic monomer has been polymerized. Accordingly, the hollow inorganic fine particles 18 can be uniformly scattered in the pressure-sensitive adhesive layer 12. Further, when the specific gravity thereof is greater than or equal to the aforementioned range, the glass strength is secured to some extent, thereby cracking of the hollow inorganic fine particles 18 themselves can be suppressed.

On the other hand, when the specific gravity of the hollow inorganic fine particle 18 is smaller than 0.8 g/cm³, and more preferably smaller than 0.5 g/cm³, the transmission rate of an ultraviolet ray is secured to some extent, and hence a decrease in the efficiency of an ultraviolet reaction can be suppressed. Further, because a cheaper material can be used, the production cost can be reduced to a lower level. Furthermore, because an increase in the mass of the pressure-sensitive adhesive layer 12 in which the hollow inorganic fine particles 18 are scattered can be suppressed, the workability during the production and use of the pressure-sensitive adhesive layer 12 can be improved, thereby also contributing to a reduction in the weight of the apparatus using the pressure-sensitive adhesive tape 12.

The use amount of the hollow inorganic fine particles 18 is not particularly limited, but the use amount thereof is, for example, within a range of 5 to 50% by volume based on the whole volume of the pressure-sensitive adhesive layer 12, preferably within a range of 10 to 50% by volume, and more preferably within a range of 15 to 40% by volume. When the use amount of the hollow inorganic fine particles 18 is smaller than 5% by volume based on the whole volume of the pressure-sensitive adhesive layer 12, there is the tendency that the effect of the addition of the hollow inorganic fine particles 18 is decreased. On the other hand, when the use amount of the hollow inorganic fine particles 18 is larger than 50% by volume based on the whole volume of the pressure-sensitive adhesive layer 12, the adhesive force by the pressure-sensitive adhesive layer 12 is sometimes decreased.

It is better that the use amount of the hollow inorganic fine particles 18 is one part by mass or more based on 100 parts by mass of the whole monomer components for forming an acrylic polymer that is the base polymer of the pressure-sensitive adhesive composition 16, and preferably five parts by mass or more. By scattering the hollow inorganic fine particles 18 into the pressure-sensitive adhesive composition 16 at a ratio larger than or equal to the aforementioned range, the total of the surface areas of the contained hollow inorganic fine particles 18 can be increased and it becomes easy to finely scatter the bubbles 20.

On the other hand, it is better that the use amount of the hollow inorganic fine particles 18 is fifteen parts by mass or less based on 100 parts by mass of the whole monomer components for forming the acrylic polymer, preferably thirteen parts by mass or less, and more preferably ten parts by mass or less. By scattering the hollow inorganic fine particles 18 into the pressure-sensitive adhesive composition 16 at a ratio smaller than or equal to the aforementioned range, the concavities and convexities created between the pressure-sensitive adhesive layer 12 and an adherend are decreased when the pressure-sensitive adhesive layer 12 is used in the pressure-sensitive adhesive tape 10, thereby a decrease in the adhesive force, occurring due to a decrease in the adhesion area, can be suppressed.

Examples of the hollow glass balloon used as the hollow inorganic fine particle 18 include ones: with a product name of "Sphericel 110P8" (made by Potters-Ballotini Co., Ltd., average diameter: 12µm, bulk specific gravity: 0. 49) , with a product name of "Sphericel 60P18" (made by Potters-Ballotini Co., Ltd., average diameter: 18 µm, bulk specific gravity: 0.32), with a product name of "Sphericel 34P30" (made by Potters-Ballotini Co., Ltd., average diameter: 35 µm, bulk specific gravity: 0.22), and with a product name of "Sphericel 25P45" (made by Potters-Ballotini Co., Ltd., average diameter: 45 µm, bulk specific gravity: 0.14), etc.

The hollow inorganic fine particles 18 may be used in combination of two or more thereof.

### (Bubble)

By using the bubble 20 as one component of the pressure-sensitive adhesive layer 12, it becomes possible, for example, to improve the initial adhesive force and the adhesiveness to a rough surface or to provide elasticity to the pressure-sensitive adhesive layer 12. Further, it becomes possible to reduce the use amount of the pressure-sensitive adhesive composition 16 and to reduce the cost.

The amount of the bubbles 20 that can be mixed into the pressure-sensitive adhesive composition 16 for forming the pressure-sensitive adhesive tape 10, can be appropriately selected, as far as no aggregation of the bubbles 20 occurs and the adhesion property, etc., of the pressure-sensitive adhesive layer 12 is not impaired. The amount of the bubbles 20 is usually within a range of five to 50% by volume (preferably within a range of ten to 40% by volume, and more preferably twelve to 30% by volume) based on the whole volume of the pressure-sensitive adhesive composition 16. When the mixed amount of the bubbles 20 is 5% by volume or more, the pressure-sensitive adhesive layer 12 can demonstrate the aforementioned properties more surely. Also, by making the amount of the contained bubbles 20 to be 50% by volume or less based on the whole volume of the pressure-sensitive adhesive layer 12, the presence of the bubbles 20 that penetrate through the pressure-sensitive adhesive layer 12 can be reduced, and thereby it can be suppressed that the adhesive property and appearance property may become poor.

It is desirable that each of the bubbles 20 mixed into the pressure-sensitive adhesive composition 16 is a closed-cell type bubble, but closed-cell type bubbles and interconnected-cell type bubbles in each of which multiple bubbles are connected with each other may coexist, as far as the sizes thereof do not become too large.

In addition, the bubble 20 mixed into the pressure-sensitive adhesive composition 16 usually has an almost spherical shape, but may have a shape other than an almost spherical shape. The average bubble size (diameter of the bubble 20) is not particularly limited, but it is needed not to form many pinholes each having a predetermined size or more and not to form large pinholes. The average diameter of the bubbles 20 is, for example, within a range of 1 to 1000 µm, preferably within a range of 10 to 500 µm, and more preferably 30 to 300 µm. The diameter of the bubble 20 may become larger as the thickness of the pressure-sensitive adhesive layer 12 is made larger. The size of the pinhole will be described later.

A gas component contained in the bubble 20 (gas component of which the bubble 20 is formed; sometimes referred to as a "bubble-forming gas") is not particularly limited, but various gas components, such as inactive gases including nitrogen, carbon dioxide, and argon, etc., and air, etc. When a bubble-forming gas is mixed with the pressure-sensitive adhesive composition 16 and then a reaction, such as a polymerization reaction, etc., is performed, it is preferable that the bubble-forming gas does not hamper the reaction. Nitrogen is preferred as a bubble-forming gas in terms of not hampering the reaction and cost.

In order to prevent the aggregation of the bubbles 20 and to make the bubbles 20 present in the pressure-sensitive adhesive composition 16 in a scattered manner, it is preferable to combine and mix, as the last component prior to the reaction, the bubbles 20 into the pressure-sensitive adhesive composition 16.

### (Surfactant)

The pressure-sensitive adhesive layer 12 and the pressure-sensitive adhesive composition 16 of which the pressure-sensitive adhesive layer 12 consists may appropriately contain various additives in accordance with the application of the pressure-sensitive adhesive tape 10 including them. For example, a surfactant is appropriately added in the pressure-sensitive adhesive layer 12 and the pressure-sensitive adhesive composition 16 according to the present embodiment, in terms of: the adhesiveness and a reduction in the frictional resistance between the hollow inorganic fine particles 18 and the base polymer; and the mixability and stability of the bubbles 20.

Examples of such a surfactant include, for example: an ionic surfactant, hydrocarbon surfactant, silicone surfactant, and fluorochemical surfactant, etc. Among them, a fluorochemical surfactant is preferred, and in particular, the fluorochemical surfactant having an oxy C₂₋₃ alkylene group and a fluorinated hydrocarbon group in its molecule is preferred. The fluorochemical surfactants may be used alone or in combination of two or more thereof. As such a fluorochemical surfactant, for example, a surfactant with a product name of "Surflon S-393" (made by AGC SEIMI CHEMICAL CO., LTD) is preferred.

The use amount (solid content) of a fluorochemical surfactant is not particularly limited, but can be selected from, for example, a range of 0.01 to 2 parts by mass (preferably 0.03 to 1.5 parts by mass, and more preferably 0.05 to 1 parts by mass) based on 100 parts by mass of the whole monomer components for forming the base polymer in the pressure-sensitive adhesive composition 16 [in particular, the whole monomer components for forming an acrylic polymer whose monomer main component is (meth) acrylic acid ester]. If the use amount of a fluorochemical surfactant is below 0.01 parts by mass based on 100 parts by mass of the base polymer in the pressure-sensitive adhesive composition 16 containing the bubbles 20, there is the tendency that it becomes difficult to mix a sufficient amount of the bubbles 20 into the pressure-sensitive adhesive composition 16 because the mixability of the bubbles 20 is decreased. On the other hand, if the use amount of a fluorochemical surfactant exceeds 2 parts by mass based on 100 parts by mass of the base polymer containing the bubbles 20, there is the tendency that the adhesive property of the pressure-sensitive adhesive layer 12 is decreased.

In the present embodiment, it is preferable that the bubbles 20 are combined and mixed into the pressure-sensitive adhesive composition 16 as the last component to be combined, so that the bubbles 20 are stably mixed into and present in the pressure-sensitive adhesive layer 12. In particular, the viscosity of the pressure-sensitive adhesive composition 16 prior to the mixture of the bubbles 20 is not particularly limited, as far as the mixed bubbles 20 can be stably held, but a viscosity within a range of 5 to 50 Pa*s (preferably within a range of 10 to 40 Pa*s) is preferred, the viscosity being measured by using a BH viscometer as a viscometer and at the conditions where a rotor is a No. 5 rotor, the number of rotations is 10 rpm, and measuring temperature is 30°C. If the viscosity (BH viscometer, No. 5 rotor, 10 rpm, 30°C) of the pressure-sensitive adhesive composition 16 into which the bubbles 20 are mixed is below 5 Pa*s, the mixed bubbles 20 are instantly aggregated together and sometimes released outside the system, because the viscosity is too low. On the other hand, if the viscosity exceeds 50 Pa*s, it becomes difficult to form the pressure-sensitive adhesive layer 12 containing the bubbles 20.

The viscosity of the acrylic monomer mixture prior to mixing the bubbles 20 can be adjusted by, for example: a method of combining various polymer components, such as acrylic rubber, and thickening additive, etc.; and a method of partially polymerizing a monomer component for forming the base polymer [for example, a monomer component for forming an acrylic polymer, such as (meth)acrylic acid ester, etc.], etc.

Specifically, a monomer mixture is prepared by mixing, for example, a monomer component for forming the base polymer [for example, a monomer component for forming an acrylic polymer, such as (meth) acrylic acid ester, etc.] and a polymerization initiator (for example, a photopolymerization initiator, etc.). And then, the monomer mixture is subjected to a polymerization reaction in accordance with the type of the polymerization initiator, so that a composition (syrup, also referred to as a prepolymer) is prepared in which part of the monomer component is only polymerized. Thereafter, a fluorochemical surfactant and the hollow inorganic fine particles 18, and various additives, if necessary, are combined into the syrup. Thereby, a precursor of the pressure-sensitive adhesive composition 16 having a proper viscosity with which the bubbles 20 can be stably contained, can be prepared. By introducing and mixing bubbles into the precursor of the pressure-sensitive adhesive composition 16, the pressure-sensitive adhesive layer 12 can be obtained in which the bubbles 20 are uniformly scattered.

A method of mixing the bubbles 20 is not particularly limited, but a publicly-known bubble mixing method can be used. For example, an example of an apparatus includes Micro-Blender (made by IZUMI FOOD MACHINERY CO., LTD.), etc. The pressure-sensitive adhesive composition 16 containing the bubbles 20 is introduced between the teeth on the stator and that on the rotor in the apparatus, and while rotating the rotor at high speed, a gas component for forming the bubbles 20 (bubble-forming gas) is introduced into the precursor of the pressure-sensitive adhesive composition 16 through the through-hole. Thereby, the pressure-sensitive adhesive composition 16 can be obtained in which the bubbles 20 are finely scattered and mixed.

In order to suppress or prevent the aggregation of the bubbles 20, it is preferable that the processes from the mixture of the bubbles 20 to the formation of the pressure-sensitive adhesive layer 12 containing the bubbles 20 are continuously performed as a series of processes. That is, the pressure-sensitive adhesive layer 12 is obtained as follows: the pressure-sensitive adhesive composition 16 containing the bubbles 20 is first prepared by mixing the bubbles 20 as stated above; and subsequently the pressure-sensitive adhesive layer 12 is obtained by using the pressure-sensitive adhesive composition 16 containing the bubbles 20 with a publicly-known formation method. Specifically, the pressure-sensitive adhesive layer 12 containing the bubbles 20 is formed by, for example, coating the pressure-sensitive adhesive composition 16 containing the bubbles 20 on a predetermined surface, and then by drying or curing the pressure-sensitive adhesive composition 16, if necessary. In forming the pressure-sensitive adhesive composition 16 containing the bubbles 20, it is preferable to cure the pressure-sensitive adhesive composition 16 by radiating a heat ray or an activated energy ray as stated above.

In the aforementioned pressure-sensitive adhesive composition 16 containing the bubbles 20, the aggregation of the bubbles 20 hardly occurs and a sufficient amount of the bubbles 20 are stably held therein, and hence the pressure-sensitive adhesive composition 16 can be preferably used as a material for forming the pressure-sensitive adhesive layer 12 in the pressure-sensitive adhesive tape 10 by appropriately selecting a base polymer and an additive of which the pressure-sensitive adhesive composition 16 consists. Also, the aforementioned pressure-sensitive adhesive composition 16 containing the bubbles 20 can be preferably used as a material for forming the substrate 14 (in particular, the substrate containing the bubbles 20 to be used in the pressure-sensitive adhesive tape 10) by appropriately selecting a base polymer and an additive of which the pressure-sensitive adhesive composition 16 consists.

Because the aggregation of the bubbles 20 can be suppressed by using the hollow inorganic fine particles 18 in the pressure-sensitive adhesive composition 16, the use amount of a surfactant, which is added also for the purpose of suppressing the aggregation of the bubbles 20, can be reduced.

### (Other Additives)

The pressure-sensitive adhesive layer 12 according to the present embodiment may contain appropriate additives other than the base polymer, polymerization initiator, hollow inorganic fine particles 18, bubbles 20, and surfactant, in accordance with the application of the pressure-sensitive adhesive layer 12. For example, when the pressure-sensitive adhesive layer 12 is used in the pressure-sensitive adhesive tape 10, appropriate additives, such as cross-linking agent (for example, polyisocyanate cross-linking agent, silicone cross-linking agent, epoxy cross-linking agent, and alkyl-etherified melamine cross-linking agent, etc.), tackifier (solid, semisolid, or liquid tackifier at normal temperature consisting of, for example, rosin derivative resin, polyterpene resin, petroleum resin, and oil soluble phenol resin, etc.), plasticizer, filler other than the aforementioned hollow inorganic fine particle 18, anti-aging agent, antioxidant, and colorant (pigment and dye, etc.), etc., may be contained in the pressure-sensitive adhesive layer 12.

For example, when forming the pressure-sensitive adhesive layer 12 by using a photopolymerization initiator, a pigment (color pigment) for coloring the pressure-sensitive adhesive layer 12 can be used in an amount that does not hamper a photopolymerization. When black is desired as the color of the pressure-sensitive adhesive layer 12, for example, carbon black can be used. It is desirable to select the use amount of carbon black from a range of, for example, 0.15 parts by mass or less (for example, within a range of 0.001 to 0.15 parts by mass) based on 100 parts by mass of the whole monomer components for forming the base polymer in the pressure-sensitive adhesive composition 16 [in particular, the whole monomer components for forming an acrylic polymer whose monomer main component is (meth)acrylic acid ester], in terms of a coloring degree and not hampering a photopolymerization reaction, and more preferably from a range of 0.01 to 0.1 parts by mass.

The aforementioned pressure-sensitive adhesive layer 12 may have either form of a single layer and laminated layers. The thickness of the pressure-sensitive adhesive layer 12 is not particularly limited, but is within a range of, for example, 200 to 5000 µm, preferably within a range of 300 to 4000 µm, and more preferably within a range of 400 to 2000 µm. If the thickness thereof is smaller than 200 µm, the cushion performance is deteriorated, thereby there is the tendency that the adhesiveness to a curved surface or a concave-convex surface is deteriorated. On the other hand, if the thickness thereof is larger than 5000 µm, there is the tendency that it becomes difficult to obtain a layer with a uniform thickness.

### (Bubble-Non-Containing Pressure-Sensitive Adhesive Layer)

When the pressure-sensitive adhesive layer 12 containing bubbles (bubble-containing pressure-sensitive adhesive layer) and/or the pressure-sensitive adhesive tape 10 having the substrate 14 containing bubbles, further have a pressure-sensitive adhesive layer not containing bubbles (bubble-non-containing pressure-sensitive adhesive layer) (for example, the case where the adhesive tape 10 having a bubble-containing pressure-sensitive adhesive layer is a double-faced pressure-sensitive adhesive tape provided with the substrate 14, and the bubble-containing pressure-sensitive adhesive layer is formed on one surface of the substrate 14 and a bubble-non-containing pressure-sensitive adhesive layer is formed on the other surface thereof), the bubble-non-containing pressure-sensitive adhesive layer can be formed by using a publicly-known adhesive (for example, acrylic adhesive, rubber adhesive, vinyl alkyl ether adhesive, silicone adhesive, polyester adhesive, polyamide adhesive, urethane adhesive, fluorine adhesive, epoxy adhesive, or the like) and by using a publicly-known method of forming the pressure-sensitive adhesive layer 12. The thickness the bubble-non-containing pressure-sensitive adhesive layer is not particularly limited, but can be appropriately selected in accordance with the purpose and usage thereof.

### [Substrate]

The substrate 14 to be used in the pressure-sensitive adhesive tape 10 according to the present embodiment is not particularly limited, but can be selected from appropriate thin-walled bodies. Examples of such thin-walled bodies include, for example: paper substrates, such as paper, etc.; fiber substrates (the materials of which are not particularly limited, but can be appropriately selected from the group of, for example, Manila hemp, rayon, polyester, and pulp fiber, etc.), such as cloth, nonwoven fabric, and net, etc.; metal substrates, such as metallic foil and metal plate, etc.; plastic substrates, such as plastic film and sheet, etc.; rubber substrates, such as rubber sheet, etc.; foams, such as foam sheet, etc. ; and laminated bodies thereof (in particular, laminated bodies formed of a plastic substrate and another substrate and those formed of both plastic films (or sheets)), etc.

Examples of the materials of the plastic films and sheets include, for example: olefin resins whose monomer component is an α-olefin, such as polyethylene (PE), polypropylene (PP), ethylene-propylene copolymer, and ethylene-vinyl acetate copolymer (EVA), etc; polyester resins, such as polyethylene terephthalate (PET), polyethylene naphthalate (PEN), polybutylene terephthalate (PBT), etc.; polyvinyl chloride (PVC); vinyl acetate resin; polyphenylene sulfide (PPS); polyamide (nylon); amide resins, such as wholly aromatic polyamide (aramid), etc.; polyimide resin; and polyether ether ketone (PEEK), etc. These materials can be used alone or in combination of two or more thereof.

When a plastic substrate is used as the substrate 14, the deformation performance thereof, such as an elongation percentage, may be controlled by a stretching treatment, etc. Also, when the pressure-sensitive adhesive layer 12 is formed by being cured with an activated energy ray, it is preferable to use the substrate 14 by which the transmission of the activated energy ray is not hampered.

In order to enhance the adhesiveness with the pressure-sensitive adhesive layer 12, the surface of the substrate 14 may be subjected to a commonly-used surface treatment, such as an oxidation treatment by a chemical or physical method, for example, corona treatment, chromic acid treatment, ozone exposure, flame exposure, high-pressure electrical-shock exposure, and ionizing radiation treatment, etc., or to a coating treatment with the use of an undercoat or parting agent.

The thickness of the substrate 14 may be appropriately selected in accordance with the strength, flexibility, and purpose of use. For, example, the thickness thereof is typically 1000 µm or less (for example, within a range of 1 to 1000 µm), preferably within a range of 1 to 500 µm, and more preferably within a range of approximately 3 to 300 µm, but is not limited thereto. In addition, the substrate 14 may have either form of a single layer and laminated layers.

When a pressure-sensitive adhesive is contained in the substrate 14, the substrate 14 can be formed by using a publicly-known pressure-sensitive adhesive (for example, an acrylic pressure-sensitive adhesive, rubber pressure-sensitive adhesive, vinyl alkyl ether pressure-sensitive adhesive, silicone pressure-sensitive adhesive, polyester pressure-sensitive adhesive, polyamide pressure-sensitive adhesive, urethane pressure-sensitive adhesive, fluorine pressure-sensitive adhesive, epoxy pressure-sensitive adhesive, or the like) and by using a publicly-known method of forming a substrate. The thickness of the pressure-sensitive adhesive is not particularly limited, but can be appropriately selected in accordance with the purpose and usage thereof.

### [Separator]

In the present embodiment, a separator (release liner) may be used to protect the adhesive surface of the pressure-sensitive adhesive layer 12 or the pressure-sensitive adhesive tape 10. Alternatively, a separator may not always be used. The separator is peeled off when the adhesive surface protected by the separator is to be used (that is, when an adherend is to be attached to the pressure-sensitive adhesive layer 12 protected by the separator) .

A commonly-used release paper can be used as such a separator. Specific examples of the separator include, for example: low adhesive substrates whose main component is a fluorine polymer (for example, polytetrafluoroethylene, polychlorotrifluoroethylene, polyvinyl fluoride, polyvinylidene fluoride, tetrafluoroethylene-hexafluoropropylene copolymer, and chlorofluoroethylene-vinylidene fluoride copolymer, etc.); and low adhesive substrates whose main component is a non-polar polymer (for example, olefin resins, such as polyethylene and polypropylene, etc.), etc., as well as a substrate having a release treatment layer by a release treatment agent on at least one surface thereof. In addition, the separator can also be used as the substrate 14 for supporting the pressure-sensitive adhesive layer 12.

As the separator, for example, a separator in which a release treatment layer is formed on at least one surface of the substrate for release liner can be preferably used. Examples of such a substrate for release liner include: plastic substrate films (synthetic resin films), such as polyester film (polyethylene terephthalate film, etc.), olefin resin film (polyethylene film or polypropylene film, etc.), polyvinylchloride film, polyimide film, polyamide film (nylon film), and rayon film, etc.; papers (high-quality paper, Japanese paper, craft paper, glassine paper, synthetic paper, top coat paper, etc.); and multilayered substrates formed by laminating or co-extruding these (complex having two or three layers), etc.

On the other hand, the release treatment agent of which the release treatment layer consists is not particularly limited, but, for example, a silicone release treatment agent, fluorine release treatment agent, and long-chain alkyl release treatment agent, etc. , can be used. The release treatment agents can be used alone or in combination of two or more thereof. In addition, the thickness of the separator and a formation method thereof, etc., are not particularly limited.

### [Acrylic Adhesive Tape]

When an acrylic polymer is contained in the pressure-sensitive adhesive composition 16 or the substrate 14 in the pressure-sensitive adhesive tape 10 according to the present embodiment, the pressure-sensitive adhesive tape 10 is excellent in the initial adhesiveness at low temperature (for example, temperature between approximately -20°C and 5°C). Further, when the bubbles 20 are contained in the pressure-sensitive adhesive layer 12 or the substrate 14, the pressure-sensitive adhesive tape 10 exhibits high resistance to resilience because of the improvement of the stress relaxation property. Furthermore, because the pressure-sensitive adhesive tape 10 can easily follow a curved surface, a concave-convex surface, and a bend of an adherend, an area enough for adhesion can be secured. Furthermore, because the pressure-sensitive adhesive tape 10 is excellent in stress dispersibility, high shear force can be obtained. In particular, because the pressure-sensitive adhesive tape 10 according to the embodiment has the pressure-sensitive adhesive layer 12 moderately containing the hollow inorganic fine particles 18, excellent adhesive force at normal temperature and adhesive shear force can be obtained.

The acrylic pressure-sensitive adhesive tape 10 is excellent in the initial adhesiveness to the adherends that does not adhere to others easily, such as: coating films (for example, acid-rain resistant coating film and automotive coating film, etc.) ; metal plates, such as painted plate, resin plate, and steel plate, etc.; and coated plates (for example, a coated plate in which a coating film, such as the aforementioned acid-rain resistant coating film or automotive coating film, etc. , is coated on the surface of a metal plate, such as the aforementioned resin plate or steel plate, etc.), etc. In particular, the acrylic pressure-sensitive adhesive tape 10 is excellent in the initial adhesiveness to an automotive coated steel sheet, such as automobile body, etc.

A coating film that is an adherend is not particularly limited, and examples thereof include various coating films, for example, such as polyester melamine coating film, alkyd melamine coating film, acrylic melamine coating film, acrylic urethane coating film, and acrylic-polyacid curing agent, etc.

The shape of an adherend that does not adhere to others easily, to which the pressure-sensitive adhesive tape 10 according to the present embodiment is applied, is not particularly limited. For example, the adherend that does not adhere to others easily may have a shape, such as a planar shape, a three-dimensional, curved shape, or the like. Alternatively, the adherend may be made by performing a coating treatment on a molded article having a shape, such as a planar shape, a three-dimensional, curved shape, or the like.

Such the acrylic pressure-sensitive adhesive tape 10 is used, for example, in a manner of being attached to an automotive coated steel sheet to protect the coated film or to provide a decoration. Also, the acrylic pressure-sensitive adhesive tape 10 can be used such that an article is joined or fixed to an automotive coated steel sheet therethrough. Examples of the aforementioned article include, for example, exterior parts of a vehicle (in particular, flexible hollow members made of rubber, such as weather strip, etc.), and protective parts and decorative parts of an automotive body.

### [Outline of Production Method]

The pressure-sensitive adhesive composition 16 according to the present embodiment is coated on a predetermined surface and cured with photopolymerization by radiating an ultraviolet ray to form the pressure-sensitive adhesive layer 12. The pressure-sensitive adhesive layer 12 has pressure-sensitive adhesiveness itself and becomes a pressure-sensitive adhesive layer, which is made to be adhesive. The pressure-sensitive adhesive composition 16 may be coated directly on an adherend, or may be once coated on a release paper and cured. The pressure-sensitive adhesive layer 12 formed on a release paper can also be transferred on an adherend. A radiation amount of an ultraviolet ray in the photopolymerization is within a range of approximately 200 to 3000 mJ/cm². In this case, the thickness of the pressure-sensitive adhesive layer 12 is arbitrary as far as the thickness thereof is greater than or equal to the size of the hollow inorganic fine particle 18; however, it is preferable to be within a range of approximately 400 to 2000 µm.

When coating the pressure-sensitive adhesive composition 16 on the substrate 14, etc., it is preferable to increase the viscosity of the pressure-sensitive adhesive composition 16 in order to smoothly perform the work. An increase in the viscosity thereof can be adjusted by, for example: a method of combining various polymer components, such as acrylic rubber, and thickening additive, etc.; and a method of partially polymerizing a monomer component for forming a base polymer [for example, a monomer component for forming an acrylic polymer, such as (meth)acrylic acid ester, etc.], etc.

### [Pinhole]

The pinhole means a structure in which, when light is radiated from one surface of the pressure-sensitive adhesive layer 12 that is not laminated on the substrate 14, the transmission amount of the light on the other surface thereof exceeds a predetermined threshold value due to the presence of the bubble 20 having a predetermined size or more in the pressure-sensitive adhesive layer 12. The predetermined threshold value will be described later. A structure in which the bubble 20 forms a through-hole in the pressure-sensitive adhesive layer 12 is also included in the above pinhole. The pinhole readily transmits light as the diameter of the bubble 20 is larger. The pinholes are classified into three categories of a small pinhole, a middle pinhole, and a large pinhole, based on their transmissivity of light.

In the measurement of a pinhole, light is first radiated from one surface of the pressure-sensitive adhesive layer 12 that has been formed by UV-polymerization, by using a halogen lamp (JCR15V150W5H/5), and then the transmission of the light is photographed on the other surface thereof. Subsequently, assuming that the region where the transmission of the light has been observed on the photographed image is a pinhole, the area of the pinhole is determined by using the VISION POINT VP-L1000 (made by HAGA ELECTRIC Ltd.) based on the image data of the region. Subsequently, the diameter of a perfect circle into which the transmission area of the light has been converted is determined, which is assumed to be the diameter of the pinhole (which is supposed to have an approximately spherical shape). That is, even in the case where a pinhole is formed by a distorted bubble in which multiple bubbles have been aggregated, the pinhole is evaluated by supposing that the pinhole is a perfect circle.

When the thickness of the pressure-sensitive adhesive layer 12 is within a range of 0.4 to 2. 0 mm, the region having a diameter of 0.25 mm or more is assumed to be a pinhole region. In this case, a small pinhole is specified as the pinhole having a diameter within a range of 0.25 mm or more to less than 0.8 mm. A middle pinhole is specified as the pinhole having a diameter within a range of 0.8 mm or more to less than 1.5 mm. A large pinhole is specified as the pinhole having a diameter of 1.5 mm or more.

In this case, the number of the large pinholes each having a diameter of 1.5 mm or more is 0.004 or less per a region of 100 cm 1 cm whose long side is oriented along the longitudinal direction of the tape, preferably 0.002 or less, and more preferably 0.001 or less. Herein, the number of the large pinholes specifies the density of pinholes in the longitudinal direction of the tape. Accordingly, when the pressure-sensitive adhesive tape 10 is, for example, shorter or slimmer than the aforementioned region, the number thereof is changed in accordance with it. This is the same as each of the following middle pinhole and small pinhole.

As stated above, by making the number of the large pinholes each having a diameter of 1.5 mm or more to be 0.004 or less per a region of 100 cm × 1 cm whose long side is oriented along the longitudinal direction of the tape, the pressure-sensitive adhesive tape 10 having a good appearance property can be formed in which the large pinholes are very scarce. Further, by making the number of the large pinholes to be 0.002 or less, the pressure-sensitive adhesive tape 10 having a good appearance property can be formed in which the large pinholes are extremely scarce. Furthermore, by making the number of the large pinholes to be 0.001 or less, the pressure-sensitive adhesive tape 10 having an extremely good appearance property can be formed in which the large pinholes are not substantially present.

The number of the middle pinholes each having a diameter within a range of 0.8 mm or more to less than 1.5 mm is 0.1 or less per a region of 100 cm × 1 cm whose long side is oriented along the longitudinal direction of the tape, preferably 0.05 or less, and more preferably 0.03 or less.

As stated above, by making the number of the middle pinholes each having a diameter within a range of 0.8 mm or more to less than 1.5 mm to be 0.1 or less per a region of 100 cm × 1 cm whose long side is oriented along the longitudinal direction of the tape, the pressure-sensitive adhesive tape 10 having a good appearance property can be formed in which the middle pinholes are very scarce. Further, by making the number of the middle pinholes to be 0.05 or less, the pressure-sensitive adhesive tape 10 having a good appearance property can be formed in which the middle pinholes are extremely scarce. Furthermore, by making the number of the middle pinholes to be 0.03 or less, the pressure-sensitive adhesive tape 10 having an extremely good appearance property can be formed in which the middle pinholes are not substantially present.

The number of the small pinholes each having a diameter within a range of 0.25 mm or more to less than 0.8 mm is 1 or less per a region of 100 cm × 1 cm whose long side is oriented along the longitudinal direction of the tape, preferably 0.3 or less, and more preferably 0.1 or less.

As stated above, by making the number of the small pinholes each having a diameter within a range of 0.25 mm or more to less than 0.8 mm to be 1 or less per a region of 100 cm 1 cm whose long side is oriented along the longitudinal direction of the tape, it becomes possible to greatly improve the adhesiveness, light blocking effect, and appearance property of the pressure-sensitive adhesive tape 10. Further, by making the number of the small pinholes to be 0. 3 or less, it becomes possible to dramatically improve the adhesiveness, light blocking effect, and appearance property of the pressure-sensitive adhesive tape 10. Furthermore, by making the number of the small pinholes to be 0.1 or less, the pressure-sensitive adhesive tape 10 excellent in adhesiveness, light blocking effect, and appearance property can be formed.

When the thickness of the pressure-sensitive adhesive layer 12 in the pressure-sensitive adhesive tape 10 is less than 0.4 mm, the threshold value of each of the large pinhole, middle pinhole, and small pinhole may be smaller than what has been described above. In addition, when the thickness of the pressure-sensitive adhesive layer 12 in the pressure-sensitive adhesive tape 10 is more than 2.0 mm, the threshold value of each of the small pinhole, middle pinhole, and large pinhole may be larger than what has been described above. For example, when the thickness of the pressure-sensitive adhesive layer 12 in the pressure-sensitive adhesive tape 10 is within a range of 0.2 mm or more to less than 0.4 mm, it may be specified that a pinhole having a diameter within a range of 0.1 mm or more to less than 0.5 mm is a small pinhole, a pinhole having a diameter within a range of 0.5 mm or more to less than 1.0 mm is a middle pinhole, and a pinhole having a diameter of 1. 0 mm or more is a large pinhole. In addition, for example, when the thickness of the pressure-sensitive adhesive layer 12 in the pressure-sensitive adhesive tape 10 is within a range of more than 2.0 mm and 4.0 mm or less, it may be specified that a pinhole having a diameter within a range of 0.5 mm or more to less than 1.0 mm is a small pinhole, a pinhole having a diameter within a range of 1.0 mm or more to less than 2.0 mm is a middle pinhole, and a pinhole having a diameter of 2.0 mm or more is a large pinhole.

According to the pressure-sensitive adhesive tape 10, the aggregation of the bubbles 20 can be suppressed, and hence it becomes possible to contain an amount of the bubbles 20, which is larger than before, in the pressure-sensitive adhesive composition 16. Thereby, reductions in the weight and cost of the pressure-sensitive adhesive tape 10 can also be achieved. Examples

Hereinafter, the present invention will be described in more detail based on Examples, but the invention should not be limited at all by these Examples.

### (Example 1)

After a monomer mixture in which 90 parts by mass of 2-ethylhexyl acrylate and 10 parts by mass of acrylic acid had been mixed as monomer components, 0.05 parts by mass of a photopolymerization initiator with a product name of "IRGACURE 651" (made by Ciba Speciality Chemicals Inc.), and 0.05 parts by mass of that with a product name of "IRGACURE 184" (made by Ciba Speciality Chemicals Inc.) were combined, ultraviolet rays were radiated until the viscosity (BH viscometer, No. 5 rotor, 10 rpm, measurement temperature: 30°C) became approximately 15 Pa*s to produce a partially polymerized composition (prepolymer). 1, 6-Hexanediol diacrylate in an amount of 0.08 parts by mass was added in 100 parts by mass of the prepolymer. Hollow glass balloons with a product name of "Sphericel 25P45" (made by Potters-Ballotini Co., Ltd.) in an amount of 9.0 parts by mass were further added in the the prepolymer. A surfactant with a product name of "Surflon S-393" (made by AGC SEIMI CHEMICAL CO., LTD; acrylic copolymer having a polyoxyethylene group and a fluorinated hydrocarbon group in its side chain, MW = 8300) in an amount of one part by mass was further added to produce a precursor of a pressure-sensitive adhesive. The volume of the hollow glass balloons in the precursor of a pressure-sensitive adhesive was approximately 1.5% by volume based on the whole volume of the precursor thereof. Nitrogen was introduced into the precursor of a pressure-sensitive adhesive by using the Micro-Blender (made by IZUMI FOOD MACHINERY CO., LTD.) to mix bubbles. The nitrogen was introduced such that the amount of the bubbles was approximately 20% by volume based on the whole volume of the discharged liquid, to obtain a pressure-sensitive adhesive composition containing bubbles.

The obtained pressure-sensitive adhesive composition was guided into a wet-lamination roll coater to be coated between the release treatment surfaces of the substrate made of polyethylene terephthalate whose one surface was subjected to a release treatment such that the thickness of the pressure-sensitive adhesive layer 12 was 0.8 mm after being dried and cured. That is, the pressure-sensitive adhesive composition was sandwiched between the substrates made of polyethylene terephthalate. Subsequently, the both surfaces of the substrate were irradiated, for three minutes, with ultraviolet rays having an illumination intensity of approximately 5 mW/cm² to cure the pressure-sensitive adhesive composition, so that a pressure-sensitive adhesive sheet having a pressure-sensitive adhesive made of the pressure-sensitive adhesive composition was obtained.

The size of the obtained pressure-sensitive adhesive sheet was measured such that the width was 1200 mm and the length was 500 m. Immediately after the measurement, the pressure-sensitive adhesive sheet was wound into a roll shape and then cut into a predetermined size to obtain a pressure-sensitive adhesive tape.

### (Comparative Example 1)

A pressure-sensitive adhesive tape was produced in the same way as that of Example 1, except that hollow glass balloons with a product name of "Q-CEL 5020" (made by Potters-Ballotini Co., Ltd.) were added in an amount of 5.5 parts by mass based on the prepolymer. The size of the obtained pressure-sensitive adhesive sheet was the same as that of Example 1.

The pressure-sensitive adhesive tapes obtained in Example 1 and Comparative Example 1 were subjected to the following measurements. The measurement results are shown in Tables 1 and 2.

### (Measurement of Number of Pinholes)

The regions (upstream region, middle-stream region, downstream region), which were obtained by trisecting a pressure-sensitive adhesive tape in its longitudinal direction, were first defined in each of the pressure-sensitive adhesive tapes of Example 1 and Comparative Example 1. That is, the roll having a width of 1200 mm and a length of 500 m was divided into the three regions each having a width of 1200 mm and a length of 500/3 m, and the three regions were respectively defined as an upstream region, middle-stream region, and downstream region, in the order of being discharged from the wet-lamination roll coater. With respect to the upstream region, middle-stream region, and downstream region, the number of each of the large pinholes, middle pinholes, and small pinholes was measured by the aforementioned method of measuring the number of pinholes.

As stated above, the thickness of the pressure-sensitive adhesive layer 12 in the pressure-sensitive adhesive tape in each of Example 1 and Comparative Example 1 is 0.8 mm. In this case, a small pinhole is specified as the pinhole having a diameter within a range of 0.25 mm or more to less than 0.8 mm, a middle pinhole is specified as the pinhole having a diameter within a range of 0.8 mm or more to less than 1.5 mm, and a large pinhole is specified as the pinhole having a diameter of 1.5 mm or more, respectively.

Table 1 illustrates the result of quantifying each of the aforementioned numbers as the number of pinholes per the pressure-sensitive adhesive tape having a size of 100 cm in length × 1 cm in width. The pressure-sensitive adhesive tape used in the measurement had a whole length of 500 m or more. The tape was trisected into three phases of a coating early phase (upstream region), a coating middle phase (middle-stream region), and a coating late phase (downstream region). Five regions each having a size of 100 cm in length × 120 cm in width were randomly selected from each phase to measure the number of pinholes, and thereby an average was determined. The number of pinholes per the pressure-sensitive adhesive tape having a size of 100 cm in length × 1 cm in width was converted based on the above average number of pinholes. Each column illustrates the Sphericel 25P45 of Example 1 and the Q-CEL 5020 of Comparative Example 1, in the order from the left. Each row illustrates, in the order from the top, the number of the large pinholes (having a diameter of 1.5 mm or more), middle pinholes (having a diameter within a range of 0.8 mm or more to less than 1.5 mm), and small pinholes (having a diameter within a range of 0.25 mm or more to less than 0.8 mm) in each of the upstream region, middle-stream region, downstream region, and whole of the three regions.

**[Table 1]**

| NUMBER OF PINHOLES PER PRESSURE-SENSITIVE ADHESIVE TAPE OF 100 cm × 1 cm | | EXAMPLE 1 | COMPARATIVE EXAMPLE 1 |
|---|---|---|---|
| | | Sphericel | Q-CEL |
| | | 25P45 | 5020 |
| UPSTREAM REGION | LARGE PINHOLE | 0 | 0.006 |
| | MIDDLE PINHOLE | 0 | 0.29 |
| | SMALL PINHOLE | 0.001 | 3.98 |
| MIDDLE-STREAM REGION | LARGE PINHOLE | 0 | 0.002 |
| | MIDDLE PINHOLE | 0 | 0.248 |
| | SMALL PINHOLE | 0.003 | 1. 922 |
| DOWNSTREAM REGION | LARGE PINHOLE | 0 | 0.01 |
| | MIDDLE PINHOLE | 0 | 0.27 |
| | SMALL PINHOLE | 0.006 | 1.73 |
| TOTAL | LARGE PINHOLE | 0 | 0.0 18 |
| | MIDDLE PINHOLE | 0 | 0.808 |
| | SMALL PINHOLE | 0.010 | 7. 632 |
| RATIO (UPSTREAM/DOWNSTREAM) | LARGE PINHOLE | - | 0.6 |
| | MIDDLE PINHOLE | - | 1.07 |
| | SMALL PINHOLE | 0.182 | 2.30 |

In the Sphericel 25P45 of Example 1, the number of each of the large pinholes and middle pinholes per the pressure-sensitive adhesive tape having a size of 100 cm in length × 1 cm in width was zero, and the number of the small pinholes was 0.010, as illustrated in Table 1. Further, in the pressure-sensitive adhesive tape of Example 1, the distribution of pinholes in the coating longitudinal direction was uniform, as shown from the comparison of the numbers of pinholes in the upstream region, middle-stream region, and downstream region. Furthermore, in the pressure-sensitive adhesive tape of Example 1, the distribution thereof was also uniform in the coating width direction.

On the other hand, in the Q-CEL 5020 of Comparative Example 1, the number of the large pinholes per the pressure-sensitive adhesive tape having a size of 100 cm in length × 1 cm in width was 0.018, that of the middle pinholes was 0.808, and that of the small pinholes was 7.632, as illustrated in Table 1. In addition, in the pressure-sensitive adhesive tape of Comparative Example 1, the distribution of pinholes in the coating longitudinal direction was relatively non-uniform. In the coating longitudinal direction, more pinholes were detected on the downstream side (the side where the tape was produced early) than on the upstream side (the side where the tape was produced later).

As stated above, the total number of the large pinholes, middle pinholes and small pinholes was less than at least 1/100 in Example 1, which was extremely small in comparison with Comparative Example 1. Further, in the pressure-sensitive adhesive tape of Example 1 in which the Sphericel 25P45 was used as the hollow glass balloons, the distribution of the pinholes in the coating longitudinal direction was uniform in comparison with the pressure-sensitive adhesive tape of Comparative Example 1.

### (Quantification of Metallic Elements in Hollow Glass Balloon)

The concentration of each of the metallic elements in the hollow glass balloon was quantified by an inductively coupled plasma mass spectrometry (ICP-MS).

Table 2 illustrates the results of qualifying each of the metallic elements in the hollow glass balloon. Each column illustrates, in the order from the left, the results of measuring the Sphericel 25P45 of Example 1 and the Q-CEL 5020 of Comparative Example 1. Each row illustrates the amounts (unit: µg/g = ppm) of the metallic element detected in a specimen. The row at the bottom illustrates Na/Si ratios.

**[Table 2]**

| **METALLIC ELEMENT** (ppm) | **EXAMPLE 1** | **COMPARATIVE EXAMPLE 1** |
|---|---|---|
| | Sphericel | Q-CEL |
| | 25P45 | 5020 |
| B | 13,000 | 23, 000 |
| Na | 50, 000 | 240, 000 |
| Si | 320, 000 | 3 00, 000 |
| Ca | 34, 000 | 43 |
| Zn | 8, 900 | - |
| OTHERS | 6, 316 | 1, 800 |
| Na/Si RATIO | 0.156 | 0.800 |

As illustrated in Table 2, there was a difference of only approximately 1.07 times between the concentrations of Si element in the hollow glass balloons in the Sphericel 25P45 of Example 1 and the Q-CEL 5020 of Comparative Example 1. On the other hand, the concentration of Na element in the hollow glass balloon that was the Q-CEL 5020 of Comparative Example 1 was 4.8 times higher than that in the hollow glass balloon that was the Sphericel 25P45 of Example 1.

As a result, in the Sphericel 25P45 of Example 1 whose main material is borosilicate glass, the Na/Si ratio was 0.156 that was a very low value, as illustrated in Table 2. On the other hand, in the Q-CEL 5020 of Comparative example 1 whose main material is borosilicate sodium glass, the mass ratio of sodium and silicon included in the hollow glass balloon (Na/Si ratio) was 0.800 that was a high value.

Also, the concentration of Ca contained in the Sphericel 25P45 of Example 1 was 34000 ppm that was a high value, as illustrated in Table 2. On the other hand, that contained in the Q-CEL 5020 of Comparative Example 1 was 43 ppm that was approximately 1/1000 times lower than the above value.

Also, the concentration of Zn contained in the Sphericel 25P45 of Example 1 was 8900 ppm that was a high value, as illustrated in Table 2. On the other hand, Zn was not detected in the Q-CEL 5020 of Comparative Example 1.

## Claims

1. A pressure-sensitive adhesive tape comprising
a pressure-sensitive layer containing a pressure-sensitive composition, a bubble, and a hollow inorganic fine particle, wherein
the hollow inorganic fine particle contains at least sodium and silicon, and wherein
the mass ratio of the sodium and silicon contained in the hollow inorganic fine particle (Na/Si) is 0.5 or less.

2. The pressure-sensitive adhesive tape according to claim 1, wherein the hollow inorganic fine particle contains borosilicate glass.

3. The pressure-sensitive adhesive tape according to claim 1 or 2, wherein the pressure-sensitive adhesive composition contains an acrylic polymer.

4. The pressure-sensitive adhesive tape according to claim 1, wherein, when a pinhole region is present in the pressure-sensitive adhesive layer where the light that has been radiated onto one surface of the pressure-sensitive adhesive layer is transmitted through the pressure-sensitive adhesive layer up to the other surface thereof, the number of the pinhole regions each having a diameter of 1.5 mm or more is 0.004 or less per a region of 100 cm x 1 cm whose long side is oriented along the longitudinal direction of the tape, wherein the number of pinhole regions is determined as described in the specification.

5. The pressure-sensitive adhesive tape according to claim 4, wherein the number of the pinhole regions each having a diameter within a range of 0.8 mm or more to less than 1.5 mm is 0.1 or less per a region of 100 cm x 1 cm whose long side is oriented along the longitudinal direction of the tape.

6. The pressure-sensitive adhesive tape according to claim 4 or 5, wherein the number of the pinhole regions each having a diameter of 1.5 mm or more is 0.001 or less per a region of 100 cm x 1 cm whose long side is oriented along the longitudinal direction of the tape.

## Patentansprüche

1. Druckempfindliches Klebeband, umfassend
eine druckempfindliche Schicht enthaltend eine druckempfindliche Zusammensetzung, eine Blase und ein hohles anorganisches feines Partikel, wobei
das hohle anorganische feine Partikel wenigstens Natrium und Silizium enthält, und wobei
das Massenverhältnis des Natriums und Siliziums, welches in dem hohlen anorganischen feinen Partikel enthalten ist (Na/Si) 0,5 oder weniger beträgt.

2. Druckempfindliches Klebeband nach Anspruch 1, wobei das hohle anorganische feine Partikel Borosilikatglas enthält.

3. Druckempfindliches Klebeband nach Anspruch 1 oder 2, wobei die druckempfindliche Klebezusammensetzung ein Acrylpolymer enthält.

4. Druckempfindliches Klebeband nach Anspruch 1, wobei, wenn ein Nadellochbereich bzw. Pinholebereich in dem druckempfindlichen Klebeband vorhanden ist, wo das Licht, das auf eine Oberfläche des druckempfindlichen Klebebandes durch die druckempfindliche Klebeschicht auf die andere Oberfläche geleitet wurde, beträgt die Anzahl der Nadellochbereiche, welche jeweils einen Durchmesser von 1,5 mm oder mehr aufweisen 0,004 oder weniger je eines Bereichs von 100 cm x 1 cm beträgt, dessen Längsseite entlang der Längsrichtung des Bandes orientiert ist, wobei die Anzahl der Nadellochbereiche wie in der Beschreibung beschrieben bestimmt ist.

5. Druckempfindliches Klebeband nach Anspruch 4, wobei die Anzahl der Nadellochbereiche, die jeweils einen Durchmesser innerhalb eines Bereiches von 0,8 mm oder mehr bis weniger als 1,5 mm aufweisen, 0,1 oder weniger je eines Bereiches von 100 cm x 1 cm beträgt, dessen Längsseite entlang der Längsrichtung des Bandes orientiert ist.

6. Druckempfindliches Klebeband nach Anspruch 4 oder 5, wobei die Anzahl der Nadellochbereiche, die jeweils einen Durchmesser von 1,5 mm oder mehr aufweisen 0,001 oder weniger je eines Bereichs von 100 cm x 1 cm aufweisen, dessen Längsseite entlang der Längsrichtung des Bandes orientiert ist.

## Revendications

1. Bande adhésive sensible à la pression comprenant :
une couche sensible à la pression contenant une composition sensible à la pression, une bulle et une fine particule inorganique creuse, dans laquelle :
la fine particule inorganique creuse contient au moins du sodium et du silicium, et dans laquelle :
le rapport massique du sodium et du silicium contenus dans la fine particule inorganique creuse (Na/Si) est de 0,5 ou moins.

2. Bande adhésive sensible à la pression selon la revendication 1, dans laquelle la fine particule inorganique creuse contient du verre borosilicaté.

3. Bande adhésive sensible à la pression selon la revendication 1 ou 2, dans laquelle la composition adhésive sensible à la pression comprend un polymère acrylique.

4. Bande adhésive sensible à la pression selon la revendication 1, dans laquelle, lorsqu'une région de trou d'épingle est présente dans la couche adhésive sensible à la pression où la lumière qui a été rayonnée sur une surface de la couche adhésive sensible à la pression est transmise par la couche adhésive sensible à la pression jusqu'à son autre surface, le nombre de régions de trou d'épingle ayant chacune un diamètre de 1,5 mm ou plus est de 0,004 ou moins par région de 100 cm x 1 cm dont le côté longitudinal est orienté le long de la direction longitudinale de la bande, dans laquelle le nombre de régions de trou d'épingle est déterminé de la manière décrite dans la description.

5. Bande adhésive sensible à la pression selon la revendication 4, dans laquelle le nombre de régions de trou d'épingle ayant chacune un diamètre de l'ordre de 0,8 mm ou plus jusqu'à moins de 1,5 mm est de 0,1 ou moins par région de 100 cm x 1 cm dont le côté longitudinal est orienté le long de la direction longitudinale de la bande.

6. Bande adhésive sensible à la pression selon la revendication 4 ou 5, dans laquelle le nombre de régions de trou d'épingle ayant chacune un diamètre de 1,5 mm ou plus est de 0,001 ou moins par région de 100 cm x 1 cm dont le côté longitudinal est orienté le long de la direction longitudinale de la bande.
